## Europäisches Patentamt

## European Patent Office

## Office européen des brevets

(19)

(11) Numéro de publication: **0 250 810**
**B1**

(12) **FASCICULE DE BREVET EUROPEEN**

(45) Date de publication du fascicule du brevet:
**13.06.90**

(21) Numéro de dépôt: **87107012.4**

(22) Date de dépôt: **14.05.87**

(51) Int. Cl.⁵: **A47J 31/40**, A47J 31/00,
A47J 31/32

(54) **Procédé d'extraction de cartouches fermées pour la préparation de boissons.**

(30) Priorité: **27.06.86 CH 2607/86**

(43) Date de publication de la demande:
**07.01.88 Bulletin 88/1**

(45) Mention de la délivrance du brevet:
**13.06.90 Bulletin 90/24**

(84) Etats contractants désignés:
**AT BE CH DE ES FR GB IT LI LU NL SE**

(56) Documents cités:
**CH-A- 406 561
DE-A- 2 432 141
DE-C- 700 822
DE-C- 715 730
FR-A- 1 032 159
FR-A- 2 140 619
GB-A- 2 123 685
US-A- 2 827 845**

(73) Titulaire: **SOCIETE DES PRODUITS NESTLE S.A., Case postale 353, CH-1800 Vevey(CH)**

(72) Inventeur: **Favre, Eric, La Cadette, CH-1041 Saint Barthelemy(CH)**

ACTORUM AG

## Description

L'invention concerne un procédé d'extraction de cartouches fermées contenant du café torréfié et moulu ou une autre substance aromatique pour la préparation de boissons.

Le brevet GB-A 2 123 685 concerne un procédé pour préparer une boisson à partir d'une substance à infuser telle que café ou thé dans un sachet avec partie filtrante. Ce sachet n'étant pas fermé, il n'y a pas lors du mouillage, de l'aération et de l'extraction de montée en pression.

Pour réaliser un bon café espresso à partir de cartouches fermées contenant déjà la dose de café torréfié et moulu pour une tasse de café, il faut que certaines conditions soient remplies lors de l'extraction desdites cartouches. Par cartouches, on entend plus particulièrement celles faisant l'objet du brevet CH-A 605 293. Le procédé selon l'invention précise les conditions spécifiques à respecter pour réaliser une bonne extraction de la cartouche.

L'invention concerne un procédé d'extraction de cartouches fermées, dans lequel on opère selon les étapes suivantes :

a) on introduit par le haut de la cartouche une quantité d'eau de prémouillage à une pression comprise entre 1,96 et 2,97 Bar (2 et 3 kg/cm²)

b) on injecte de l'air pour assurer une aération du café moulu ou de la substance aromatique à une pression comprise entre 2,97 et 5,94 Bar (3 et 6 kg/cm²)

c) on introduit de l'eau pour l'extraction proprement dite de la cartouche à une pression comprise entre 7,84 et 15,68 Bar (8 et 16 kg/cm²) et on récupère par le bas de la cartouche la boisson.

Si on opère avec du café moulu, on prépare selon l'invention un café espresso.

Par subtance aromatique, on entend toute substance susceptible d'être extraite, à savoir le thé et d'autres substances similaires, telles plantes aromatiques comme menthe, verveine, camomille, fenouil et autres.

La cartouche utilisée est percée par le haut pour introduire l'eau de prémouillage et d'extraction et l'air d'aération. A sa partie inférieure, elle présente un filtre et une membrane avec ligne d'affaiblissement qui s'ouvre au moment de la phase d'aération, permettant ainsi l'écoulement du café espresso ou de la boisson préparée.

Dans l'étape de prémouillage, l'eau pénètre dans la cartouche et gonfle le café. Cette eau se répartit lentement sur la mouture de café non tassé et son écoulement est arrêté par la memtrane encore fermée. Chaque grain de café moulu se développe sans aucune contrainte et augmente librement de volume. Le café moulu est ainsi uniformément humidifié et de plus tous les aômes volatils sont captés par l'eau de prémouillage avant l'ouverture de la membrane. La durée de l'étape de prémouillage est comprise entre 2 et 4 secondes.

La phase d'aération est essentielle pour obtenir un bon café espresso.

La mouture correctement humidifiée occupe la totalité du volume à disposition et offre une résistance au passage de l'air. Comme le coefficient de frottement de l'air est infiniment plus faible que celui de l'eau, l'air traverse rapidement la mouture de café et surtout se répartit uniformément dans tout le volume. Les chemins ouverts par l'air sont autant de petits canaux d'irrigation pour l'eau d'extraction. Le volume d'air, poussé par l'eau d'extraction, se comprime dans la cartouche et s'infiltre dans tous les interstices laissés libres par la mouture et pénètre même dans certaines alvéoles de la surface des grains de café moulu. Lorsque la pression de l'air imprime à la membrane de la cartouche une force supérieure à sa résistance à la rupture, elle se déchire le long de la ligne d'affaiblissement et une partie du volume d'air se détend bruyamment à l'extérieur, provoquant momentanément une diminution de pression au sein de la cartouche. L'étape d'aération dure de l'ordre de la seconde. L'étape d'aération sert également à accroître l'extraction des huiles aromatiques du café et par la traversée du filtre de la cartouche l'air donne une émulsion de ces huiles dans l'eau.

Dans la dernière étape, l'eau d'extraction ne chemine au travers des canaux d'irrigation qu'à faible pression au début. Ensuite, les forces de frottement de l'eau sur les particules tassent le café et la pression d'extraction croît exponentiellement. Cette pression cesse d'augmenter dès que les forces de tassement sont équilibrées par les forces d'expansion des canaux d'irrigation produites par la détente de l'air entraînée par l'eau. Ainsi l'extraction se poursuit à une pression constante et l'eau lessivera tous les grains de café aux conditions optimales. La durée de cette dernière phase est de moins de 20 secondes. On obtient ainsi un café espresso avec une mousse crémeuse et dorée en raison du mélange air-café et de la fraction d'air dissoute dans le café.

On peut opérer selon l'invention en effectuant les étapes de prémouillage et d'aération de manière concomitante ou par alternance. Ceci est vrai également pour les étapes d'aération et d'extraction.

On obtient ainsi selon le procédé de l'invention un café espresso de grande qualité avec une durée d'extraction réduite, avec tous les arômes produits par la torréfaction grâce à un prémouillage cartouche fermée et avec un volume d'air important emprisonné dans le café.

## Revendications

1) Procédé d'extraction de cartouches fermées contenant du café torréfié et moulu ou une autre substance aromatique pour la préparation de boissons, caractérisé en ce qu'on opère selon les étapes suivantes :

a) on introduit par le haut de la cartouche une quantité d'eau de prémouillage à une pression comprise entre 1,96 et 2,97 Bar (2 et 3 kg/cm²)

b) on injecte de l'air pour assurer une aération du café moulu ou de la substance aromatique à une pression comprise entre 2,97 et 5,94 Bar (3 et 6 kg/cm²)

c) on introduit de l'eau pour l'extraction proprement dite de la cartouche à une pression comprise entre 7,84 et 15,68 Bar (8 et 16 kg/cm²) et on récupère par le bas de la cartouche la boisson.

2) Procédé selon la revendication 1, caractérisé en ce qu'on y prépare un café espresso.

3) Procédé selon l'une des revendication 1 et 2, caractérisé en ce qu'on effectue les étapes de prémouillage et d'aération de manière concomitante ou par alternance.

4) Procédé selon l'une des revendications 1 à 3, caractérisé en ce qu'on effectue les étapes d'aération et d'extraction de manière concomitante ou par alternance.

5) Procédé d'extraction selon l'une des revendications 1 et 2, caractérisé en ce que l'étape de prémouillage dure de 2 à 4 secondes, l'étape d'aération de l'ordre de la seconde et l'étape d'extraction moins de 20 secondes.

6) Procédé selon l'une des revendications 1 à 5, caractérisé en ce que l'ouverture du bas de la cartouche a lieu au moment de l'étape d'aération.

## Claims

1. A method for the extraction of sealed cartridges containing roasted and ground coffee or any other aromatic substance for the preparation of beverages, characterized in that it comprises the following steps:

   a) a quantity of prewetting water is introduced into the cartridge from above at a pressure comprised between 1.96 and 2.97 Bar (2 and 3 kg/cm²)
   b) air is injected to aerate the ground coffee or the aromatic substance at a pressure comprised between 2.97 and 5.94 Bar (3 and 6 kg/cm²)
   c) water is introduced for the actual extraction of the cartridge at a pressure comprised between 7.84 and 15.68 Bar (8 and 16 kg/cm²) and the beverage is recovered from the cartridge from below.

2. A method as claimed in claim 1, characterized in that it is used to prepare espresso coffee.

3. A method as claimed in Claim 1 or 2, characterized in that the prewetting and aeration steps are carried out concomitantly or alternately.

4. A method as claimed in any of Claims 1 to 3, characterized in that the aeration and extraction steps are carried out concomitantly or alternately.

5. A method as claimed in Claim 1 or 2, characterized in that the prewetting step lasts from 2 to 4 seconds, the aeration step approximately 1 second and the extraction step less than 20 seconds.

6. A method as claimed in any of Claims 1 to 5, characterized in that the opening of the cartridge from below takes place during the aeration step.

## Patentansprüche

1. Verfahren zur Extraktion von geschlossenen Kapseln, die gerösteten und gemahlenen Kaffee oder eine andere aromatische Substanz zur Herstellung von Getränken enthalten, dadurch gekennzeichnet, daß man in folgenden Schritten vorgeht:

   a) man führt auf der Oberseite der Kapsel eine Menge an Vorbrühwasser unter einem Druck zwischen 1,96 und 2,97 bar (2 und 3 kg/cm²) ein
   b) man bläst Luft ein, um eine Belüftung des gemahlenen Kaffees oder der aromatischen Substanz sicherzustellen, unter einem Druck zwischen 2,97 und 5,94 bar (3 und 6 kg/cm²)
   c) man führt das Wasser für die eigentliche Extraktion in die Kapsel unter einem Druck zwischen 7,84 und 15,68 bar (8 und 16 kg/cm²) ein und man entnimmt der Unterseite der Kapsel das Getränk.

2. Verfahren nach Anspruch 1, dadurch gekennzeichnet, daß man einen Espressokaffee herstellt.

3. Verfahren nach Anspruch 1 oder 2, dadurch gekennzeichnet, daß man die Schritte des Vorbrühens und der Belüftung gleichzeitig oder aufeinanderfolgend ausführt.

4. Verfahren nach einem der Ansprüche 1 bis 3, dadurch gekennzeichnet, daß man die Schritte der Belüftung und der Extraktion gleichzeitig oder aufeinanderfolgend ausführt.

5. Verfahren nach Anspruch 1 oder 2, dadurch gekennzeichnet, daß der Vorbrühschritt 2 bis 4 s, der Belüftungsschritt in der Größenordnung von einer Sekunde und der Extraktionsschritt weniger als 20 s dauert.

6. Verfahren nach einem der Ansprüche 1 bis 5, dadurch gekennzeichnet, daß das Öffnen der Kapselunterseite beim Belüftungsschritt stattfindet.